# EUROPEAN PATENT SPECIFICATION

(11) **EP 2 518 468 B1**
(45) Date of publication and mention of the grant of the patent: **24.07.2019**
(21) Application number: 11163665.0
(22) Date of filing: 26.04.2011
(51) Int. Cl.: G01N 1/30, G01N 1/31, G01N 1/42

(54) **Method, processor and carrier for processing frozen slices of tissue of biospecimens**
Verfahren, Prozessor und Träger zur Verarbeitung von gefrorenen Gewebescheiben aus biologischen Proben
Procédé, processeur et support de traitement de tranches glacées de tissus de bio-spécimens

(43) Date of publication of application: 31.10.2012
(73) Proprietor: Milestone S.r.l., 24010 Sorisole (BG) (IT)
(72) Inventor: Visinoni, Francesco, 24030 Mozzo (BG) (IT); Bellini, Michele, 24060 Villongo (BG) (IT); Minuti, Matteo, 24053 Brignano Gera d'Adda (BG) (IT)
(74) Representative: Rupp, Christian

(56) References cited:
- EP-A1- 1 804 045
- WO-A1-01/44784
- WO-A1-2007/014742
- US-A1- 2001 051 365
- US-A1- 2005 090 017
- US-A1- 2006 199 243

## Description

### Technical field

This invention relates to a method and a processor for processing a frozen slice of tissue of a biospecimen as well as a carrier for said method and processor.

The invention thus generally relates to the field of investigation of frozen section of human tissues after removal by surgery, to confirm complete resection or to guide additional tumor extirpation for diagnostic purposes. The principal use of the frozen section procedure is the examination of tissue while surgery is taking place to guide surgeons.

### Description of the Background Art

The standard frozen section procedure makes use of the cryostat to freeze the section of human tissue such that a thin section (4-8µm) can reliably be cut from the frozen specimen block, followed by placing the thin slice of tissue on a glass slide. This arrangement is called "frozen section". Staining is carried out by hematoxylin plus eosin protocols in which slides are, generally by hand, immersed for an approximate period of time in a sequence of reagents at room temperature.

When using such frozen section slides the quality of the microscopy image, particularly when using a high magnification objective lens, is poor and identification of individual cell types, which often relies on good cytological detail, is correspondingly difficult.

Another drawback is that the described standard technique is influenced by and thus dependent on the skill and the experience of the operator.

Further, the solutions are not stirred and therefore can show a gradient of temperature along the vertical axis as well as a non homogeneity of the concentration of the reagent (pH) along the same axis.

The immersion times are not timed, but simply estimated by the single operator which makes the documentation of the process difficult and the results of the process cannot be standardized.

The laboratory room temperature variations also negatively influence the results and thus the standardization of the process.

In general, the actual frozen section procedure makes it difficult or even impossible that the amount and the "freshness" as well as the number of protocols for which solutions have been utilized are documented or standardized. This influences negatively the reliability of the procedure.

Further, when pure ethanol is used as fixative there is a great shrinkage of the cells. If formalin is utilized as fixative, it encounters increasing criticisms because of toxicity and environmental concerns.

The declaration recently issued by the International Agency for Research on Cancer, (International Agency for Research on Cancer (2006), Monographs on the evaluation of Carcinogenic Risk to humans. (IARC, Vol. 88) Lyon, France), which classified formaldehyde as a Class 1 carcinogen has increased the request by health authorities, technicians and practicing pathologists to entirely avoid or at least substantially reduce contact with formalin.

The standard frozen section procedure in use today can obtain accurate diagnostic results in almost 95% of the cases. The sensitivity for malignant tumors can be around 87%. In 5% of the cases the paraffin final section reveals morphological details that were not detected in the frozen section therefore requiring a second surgery for the patient. *("*The Accuracy of Intraoperative Frozen Section in the Diagnosis of Ovarian Tumors, Journal of Obstetrics and Gynaecology Research", Evelyn L. K. Yeo, K. M. Yu, N. C. Poddar, P. K. Hui, Dr. Lawrence C. H. Tang, Volume 24, Issue 3, pages 189-195, June 1998*)*

Moreover, EP 1 804 045 A1 discloses a method and kit for treating a biological sample. The device comprises a mixer that revolves around an axis L comprising a conducting surface, for mixing the liquid in the container.

### Object and Summary of the Invention

It is thus an object of the invention to provide a method and a processor as well as a carrier to improve the quality of the frozen section and its results, particularly of fatty tissues (e.g. breast).

The object is achieved by means of the features of the independent claims. The dependent claims develop further the central idea of the present invention.

According to a first aspect, the invention relates to a method for processing a frozen slice of a tissue of a biospecimen mounted on or adhered to a glass slide, i.e. forming a frozen section, and arranged on a carrier comprising a frame having a holding portion for holding the tissue slices or frozen sections. The tissue slices (in the following also referred to as samples) preferably have a thickness of between 1µm and 50µm, more preferred between 2µm and 10µm. The method comprising the following steps:
a.) immersing the frozen tissue slices in a fixative solution (preferably an alcohol based fixative, more preferred a fixative having the composition of FineFIX), preferably at a temperature preset above room temperature and also preferably under stirring conditions,
b.) staining the tissue slice,
c.) dehydrating the tissue slice, and
d.) optionally clearing the tissue slice.

Steps a.) to d.) are performed by automatically transferring the frozen section on the object carrier between and into and out of at least a container holding a fixative solution (preferably an alcohol based fixative solution, more preferred a fixative solution having the composition of FineFIX), at least one or optionally more, preferably two containers holding staining liquids or solutions, a container holding a dehydrating liquid or solution, and optionally a container holding a clearing liquid or solution. The terms "liquid" and "solution" are similarly used in this document. The transfer and the time duration during which the tissue slices or frozen sections are in said containers are controlled (and set) by a control unit controlling an actuator holding the samples or frozen sections. The carrier comprises a magnetic stirring means being rotary attached to the frame and which is driven by an external magnetic drive.

The whole immersing, staining, dehydrating, and clearing steps are carried out automatically by use of a control unit controlling the transfer of the sample and time duration of the single processing steps. The method enables the operator to standardize and document the complete protocol for an enhanced consistency and repeatability of results. In addition, frozen section results are independent of operator skill and experience, which further improves the results as well as documentation, standardization and repeatability. The method improves diagnostic results and thus reduce the need for a second surgery due to the higher quality of morphological results obtained.

Through the automatic control the immersion time is set assuring reliable and consistence protocol. The (micro processor) control allows reagent management protocols standardizing and documenting, for example, of the amount of reagent and of the number of uses of each reagent before an exchange of solution is required.

The present invention also allows the processing with an ethanol-based fixative reagent (see EP 1 455 174 A1) that improves the morphological quality of the slides and provides sharper chromatin pattern.

Preferably, in at least one of the steps a.) to d.), more preferably in all steps a.) to d.) the respective liquid in the container is stirred, preferably magnetically stirred.

Through magnetic stirring or other methods of stirring the temperature homogeneity in each solution container is reliably obtained. At the same time homogeneity of the pH of the entire solution is assured. Through the stirring in all of the containers the immersed surface of the frozen sections are thus subjected to a homogeneous solution concentration at a specific temperature.

The frozen section is moved into and out of at least one, preferably at least two (successive) containers, and a magnetic stirring means is moved along with the frozen section. The magnetic stirring means is driven by an external magnetic drive at least when entering at least one of the containers.

It is thus possible to attain the advantages of stirring as described above independent from the movement or transferral of the frozen section being carried out manually or automatically.

Preferably, the transfer between two containers is performed via a relative rotation of the actuator relative to the container, wherein preferably the containers are distributed over the circumference of a circle.

Hence, the time for the processing carried out can be minimized, particularly by arranging the containers about a rotatable or rotating actuator, which can thus reach each container by a simple rotational movement.

Preferably, the containers are covered by a common cover having an opening to enable the glass slide with the frozen slice of a biospecimen, i.e. the frozen section, on the object carrier to be transferred into and out of the respective container via said opening. The cover rotates along with the actuator such that the opening and the carrier remain in a fixed position relative to each other during the relative rotation of the actuator and the container.

By use of a common cover having the described opening, the closure or sealing of the containers, particularly the containers not used for the respective processing step, can be simply attained while at the same time providing an access for the sample to the container to be used.

Preferably, the temperature in the container holding the fixative is preset at a temperature above room temperature, preferably set between 20-50°C, more preferably set at 37°C.

This invention thus consists of a glass slide processing protocol which includes a first step in which frozen sections are immersed preferably for a set length of time in a fixative solution at pre-settable temperature within 20-50°C before the (hematoxylin and eosin) staining. The control of temperature allows a precise standardization of the process otherwise difficult or even impossible to be achieved due to the variation in temperature in different laboratory environments.

The simultaneous (fixation/dehydration/extraction of lipids) step a.) is most preferable carried out above room temperature (e.g. at 37°C) to assure standardization of the procedure and, as an additional advantage, a reduction in the processing time takes place due to the higher reaction speed caused by the temperature increase.

Preferably, between steps a.) and b.) the tissue slices are rinsed in a further container holding water, preferably demineralised water. The samples can also or alternatively be rinsed in an even further container holding water, preferably demineralised water, between the (preferably two) staining steps of step b.).

Preferably, the samples are stained in at least two different containers holding a staining liquid each. The staining liquid in the first staining step of step b.) preferably is hematoxylin, while in the second step of step b.) the staining liquid preferably is eosin.

Preferably, step c.) comprises at least two dehydration steps for dehydrating the samples in different containers holding a dehydrating liquid, respectively.

The clearing liquid or solution held in the respective container(s) in step d.) preferably is a compound to prepare the sample for coverslipping, such as isoparaffin or xylene, e.g. before examination at a microscope.

Preferably, the containers are fluidly connected to at least one storage tank for at least one of a fixative, a staining solution, a dehydrating solution, (demineralized) water and a clearing solution for charging and/or discharging the respective container with the fixative, the at least one, preferably two staining solutions, dehydrating solution, (demineralized) water and/or clearing solution. The charging and discharging are preferably controlled by the control unit.

Hence, the respective fluid can simply and automatically be provided and/or replaced during the process to maintain a consistent quality of the process.

According to a second aspect, the invention relates to a processor for processing frozen slices of a tissue of a biospecimen. The processor comprises a container having a fixative, at least one, preferably two containers having staining solutions, a container having a dehydrating solution, and optionally a container having a clearing solution. The processor further comprises a control unit as well as a motorized actuator which is controlled by the control unit. The actuator is designed for transferring the samples or frozen sections between and in and out of said containers. Furthermore, the processor comprises a carrier according to the fourth aspect of the invention as described herein below.

By means of said processor there is provided a system for carrying out the method according to the first (or second) aspect to attain the advantages as already described above. The layout and design of the processor is simple while at the same time facilitating improved results of the processing of frozen slices of tissue of biospecimens, a precise documentation and standardization as well as the repeatability of the processing, even for operators having different skill and experience.

The processor may further comprise at least one of the following containers: at least one further container having water, preferably demineralized water and at least one additional container having a dehydrating liquid.

Preferably, the containers are distributed over the circumference of a circle and around a vertical axis. The motorized actuator can further comprise a rotatable or rotary shaft extending along and being rotatable around the vertical axis. Hence, the structure of the processor can be simplified while providing an assembly for minimizing the time for a protocol sequence.

Preferably, the frozen sections are arranged on a carrier being removably attached to the actuator. It is thus easy to provide the samples to the processor as they can simply be arranged on a carrier independent from the actuator and then attached to the actuator afterwards.

Preferably, the carrier is removably attached to a holder of the actuator extending from the shaft and above the containers, and the holder is designed to be movable along the vertical axis. Such an exposed holder makes easy the attachment of the carrier and also the movement of the carrier (holding the frozen sections) into and out of the containers.

Preferably, the processor further comprises at least one storage tank for at least one of a fixative, a staining liquid, preferably at least two staining liquids, a dehydrating liquid, (demineralized) water and a clearing liquid, preferably being fluidly connected to the respective container. In a preferred embodiment, each of the storage tanks comprises two storage tanks or compartments for cleaned and for used fixative, staining liquid(s), dehydrating liquid, (demineralized) water and/or clearing liquid. Hence, it is easy to provide fresh liquid for each processing protocol sequence to maintain the repeatability of the process by manual, semi-automatic or full-automatic charging and/or discharging of the respective fluid.

Preferably, the processor further comprises an exhaust system to eliminate vapours escaping during a processing of the samples or tissue slices or frozen sections.

According to a third aspect, the invention relates to a carrier for a frozen slice of tissue of a biospecimen, preferably mounted on a glass slide, i.e. forming a frozen section. The carrier comprises a frame having a holding portion for holding the samples or frozen sections. A magnetic stirring means is rotatably or rotary attached to the frame, which magnetic stirring means is designed to be driven by an external magnetic drive.

The stirring means is attached to the carrier itself. Hence, when placing the carrier in a container of a processor as described above, a stirring means is always present in said container. Through the stirring in all of the containers with one single stirring means always connected to the carrier, the immersed surface of the frozen sections are subjected to a homogeneous solution concentration at a specific temperature in every container. Stirring means arranged in each and every container can thus be omitted, a processor can be reduced in size and costs for production and operation can be lowered. Since no drive is needed to be arranged on the carrier itself, the carrier can also be reduced in size and costs for production of the carrier can be lowered as well. Thus, there is only needed one single magnetic drive provided in the processor to attain stirring in each and every container with only one single stirring means rotatably attached to the carrier.

Preferably, the magnetic stirrer is provided at a bottom portion of the frame, preferably below the holding portion. It is thus guaranteed that the stirring means is always in contact with the fluid in a container, in which the carrier (or the frozen tissue of a biospecimen arranged on the carrier) is immersed.

Preferably, a top portion of the frame comprises a flange portion for attaching the carrier to an automated processor. By means of a flange portion, a standardized connection between the carrier and an actuator of a processor can be provided.

Preferably, the frame is made of a single element by forming or casting. Hence, the carrier can simply be produced at low costs.

It is still another aspect of the invention to provide a method for processing a frozen slice of a tissue of a biospecimen mounted on or adhered to a glass slide, i.e. forming a frozen section, and arranged on a carrier. The tissue slices preferably have a thickness of between 1µm and 50µm, more preferred between 2µm and 10µm. The method at least comprises the step of immersing the frozen tissue slices in a fixative solution (preferably an alcohol based fixative, more preferred a fixative having the composition of FineFIX) at a temperature preset above room temperature, preferably between 20°C to 50°C, more preferred between 30°C and 40°C, even more preferred at 37°C. The immersing step is preferably carried out by moving the frozen section into and out of a container being heated or heatable accordingly. The before-mentioned step can be followed by other steps as described above as, for instance, rinsing, staining, dehydrating, and/or clearing steps. In this case, the frozen section on the carrier is transferred between and into and out of at least a container holding a fixative solution (preferably an alcohol based fixative, more preferred a fixative having the composition of FineFIX), and at least one or more containers holding water, staining solutions, dehydrating solutions, and/or clearing solutions. The transferral can be carried out manually or automatically. Further, stirring can be carried out in at least one of the steps in the above-described manner.

### Brief description of the drawings

Further features, advantages and objects of the present invention will become apparent for a skilled person when reading the following detailed description of the embodiments of the present invention, when taken in conjunction with the figures of the enclosed drawings.
- Figure 1a: shows a processor according to the invention,
- Figure 1b: shows the processor according to figure 1a without the cover,
- Figure 2a: shows a carrier according to the invention,
- Figure 2b: shows another view of the carrier according to figure 2a,
- Figure 3: shows a flow chart of a protocol sequence for processing a frozen slice of tissue of a biospecimen according to the invention.

### Detailed description of the Embodiments

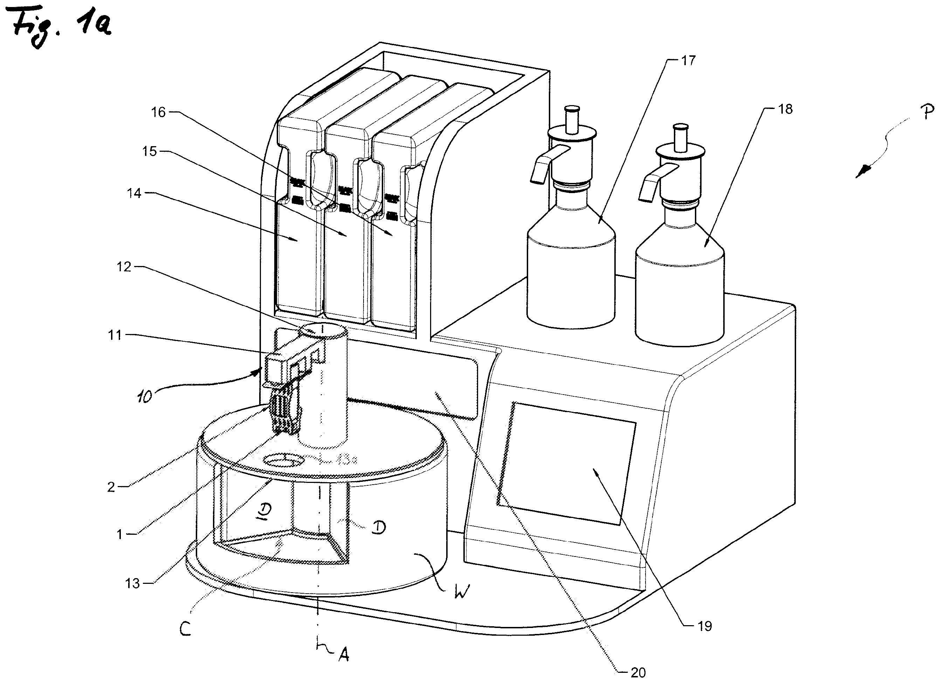

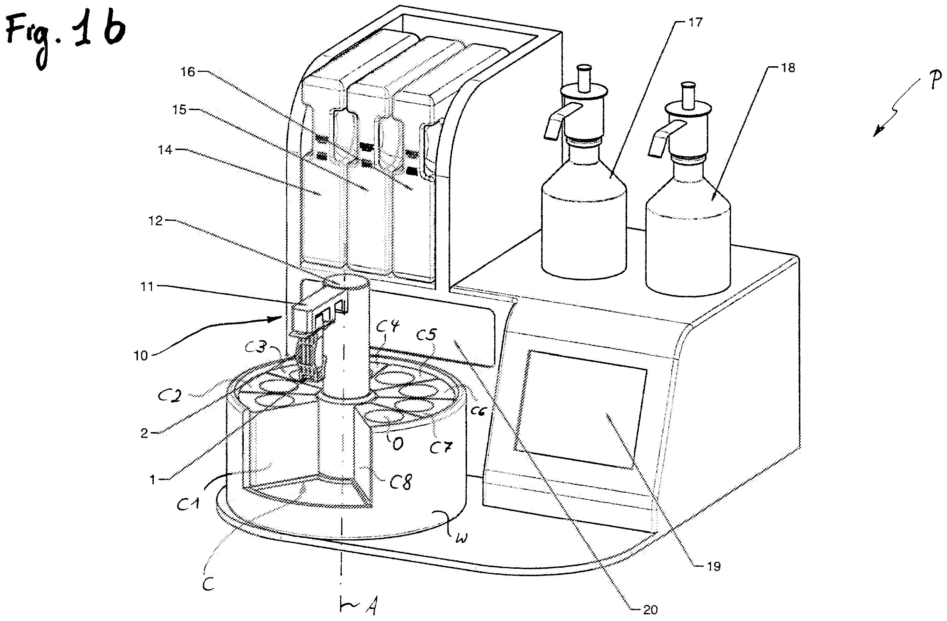

Figures 1a and 1b show a processor P for processing frozen slices of tissue of a biospecimen according to the invention. The processor P preferably is a semi-automatic or full-automatic processor, as will be described in the following.

The processor P comprises at least three, preferably at least five containers C. The processor preferably comprises one container C for each processing step being described in the following, i.e. preferably three to ten containers C, more preferred eight containers C1 to C8 (see figure 1b). The containers C can be arranged in a row, in a matrix-like arrangement (checkerboard pattern) or the like. According to a preferred embodiment, the containers C are distributed over the circumference of a circle and around a vertical axis A as shown in figure 1b.

The containers C can, for instance, be formed as single elements (e.g. having a circle sector shape in a top view thereof; see figure 1b) being arranged in a predefined order (e.g. in a (partially) circular order; see figure 1b). In this case, the containers C are preferably removably arranged in the processor P, wherein the containers C1 to C8 can be formed separately or integrally. As can be seen in figure 1b, the containers C1 to C8 can be removably arranged in a partial circular order around the vertical axis A and are surrounded by a common wall portion W to securely and accurately position the containers C1 to C8. The containers C can alternatively be formed by a single outer wall portion (e.g. the wall portion W) enclosing a space which is correspondingly divided by dividers (for example the container wall portions D) arranged therein to form the different containers C separated by the respective dividers D and outer wall portion W.

There can also be provided sensors which detect the presence or absence and/or correct positioning of the (respective) containers C in the processor P. In a preferred embodiment, the containers C further comprise a transmitting means, e.g. an electronic tag like an RFID-chip, storing information about the content thereof (e.g. the respective solution like the fixative or staining solution) and maybe about the respective processing step (e.g. time duration of the respective step) in respect of said container C. The processor P can then be provided with a corresponding reader to read out the information. In a preferred embodiment, the reader is connected to a control unit (described later) to control the processing based on the data received by the RFID-chips.

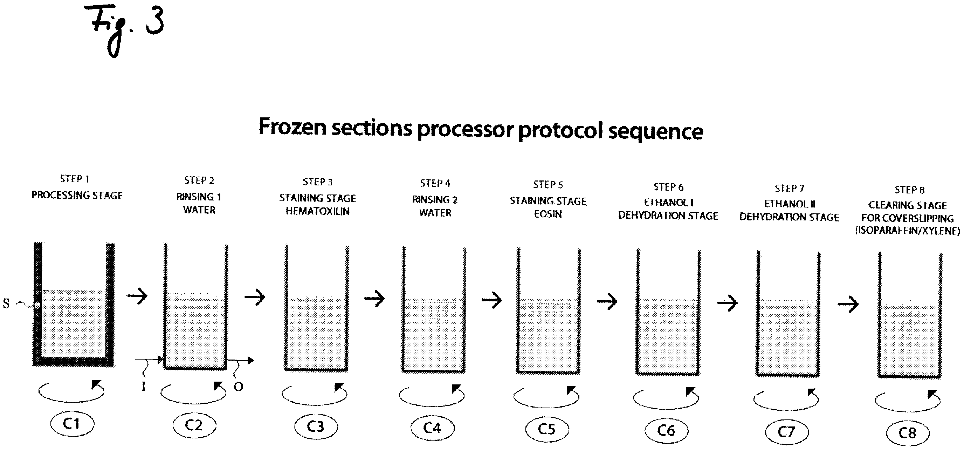

The processor P comprises at least three containers C1, C3, C6, preferably at least five containers C1, C3, C5, C6 and C8 (see figures 1b and 3), wherein a first container C1 stores a fixative (preferably an alcohol based fixative, more preferred a fixative having the composition of FineFIX), a second container C3 stores a staining liquid (preferably hematoxylin), a third container C5 stores a further staining liquid (preferably eosin), a fourth container C6 stores a dehydrating liquid (preferably absolute alcohol like ethanol), and a fifth container C8 stores a clearing liquid (preferably isoparaffin or xylene). In a preferred embodiment, the processor comprises more than three or five containers C, wherein further containers C2, C4, (C5), C7, (C8) can additionally store a rinsing liquid (like demineralized water), (a staining liquid), a dehydration liquid, (and a clearing solution).

The fixative preferably is an ethanol-based fixative reagent (Milestone FineFIX; see EP 1 455 174 A1) that improves the morphological quality of the slides and provides sharper chromatin pattern. This fixative composition comprises the following components: Ethanol, water, 1,2-propanediol, polyvinyl alcohol and an effective amount of at least one monomeric polyhydroxy compound. This fixative composition is advantageous in many aspects as described in the following. Firstly, the fixative has simultaneous fixation, dehydration and lipid extracting properties. Secondly, the tissue does not shrink when being immersed in said fixative. Thirdly, an optimal preservation of morphological details can be attained. Fourthly, the fixative has an extremely low toxicity. Fifthly, the fixative has an optimal preservation of tissues' antigenic properties with reduction of the use of antigen retrieval procedures. Sixthly, the fixative has optimal staining properties, e.g. with hematoxylin and eosin and histochemical stains. Seventhly, an optimal preservation of nucleic acids for molecular studies can be attained. Eighthly, the fixative composition is suitable as a fixative for cytological specimens and an optimal preservation of the morphology after a prolonged period of tissue's freezing.

Molecular studies have been performed and the results have been always compared with the same material fixed in formalin. The results indicate a better nucleic acid recovery from tissue materials fixed in the fixative composition of the Milestone FineFIX. However, the process and the processor can be used with any reagent other than FineFIX.

The first container C1 storing the fixative can be a heated container (see figure 3), preferably made of metal. For heating the container C1, a heating block or other known heating means can be provided. The container C1 can further be equipped with a temperature sensor S which can be connected to a control unit described later for measuring the temperature in the container C1 and controlling the heating means to regulate the temperature inside the container to be kept at a predefined temperature at least during the processing step in said container C1. Hence, the processing temperature can, for instance, be raised above room temperature (preferably 37°C) which allows consistence of results and enhancement of the speed of reaction approximately double than at room temperature (Arrhenius constant). All or some of the other containers C can additionally be equipped with a heating means and a sensor to keep the temperature inside the respective container C at a predefined level to allow a precise standardization of the process.

According to the invention and preferably independent form the above described processor P, there can (solely) be provided a heatable container C1 for immersion of a frozen section 2 in a fixative solution (preferably an alcohol based fixative, more preferred a fixative having the composition of FineFIX) at a temperature preset above room temperature, preferably between 20°C to 50°C, more preferred between 30°C and 40°C, even more preferred at 37°C. The immersing or immersing step is preferably carried out by manually or automatically moving the frozen section into and out of said container C1. The before-mentioned step can be followed by other steps already described, e.g., for rinsing, staining, dehydrating, and/or clearing the frozen section 2. In this case, the frozen section 2 (on a carrier 1 as will be described in detail hereinafter) is transferred between and into and out of at least the heatable container C1 holding the fixative solution (preferably an alcohol based fixative, more preferred a fixative having the composition of FineFIX), and at least one or more containers C2-C8 holding water, staining solutions, dehydrating solutions, and/or clearing solutions. The transferral can be carried out manually or automatically. Stirring can be carried out in at least one of the containers C or steps in a manner as will be described in detail hereinafter.

The processor P can further comprise at least one storage tank 14, 15, 16 and/or bottle 17, 18 for at least one of a fixative, a staining solution, preferably at least two staining solutions, a dehydrating liquid, water and/or clearing solutions. In figures 1a and 1b, a first storage tank 14 contains fresh, clean or cleaned demineralized water, and a second storage tank 15 contains used demineralized water to be discarded. A third storage tank 16 is filled with FineFIX solution or other suitable fixative (fixation/dehydrating solution). The invention, however, is not limited to the arrangement and number and content of the containers. For example, the processor P can comprise at least one storage tank for at least one of the fixative, the staining liquid(s), the dehydrating liquid, water and/or clearing liquid. Further, each of the storage tanks 14, 15, 16 can comprise two storage tanks 14, 15 or compartments for cleaned and for used fixative, staining liquid(s), dehydrating liquid, water, and clearing liquid, respectively. Hence, it is easy to provide fresh liquid for each processing protocol sequence to maintain the repeatability of the process by manual, semi-automatic or full-automatic charging and/or discharging of the respective fluid.

Further, the processor P can also comprise a reagent management control to advise the user on refilling or exchanging schedule of reagents by an audible and/or visible alarm. Therefore, sensors for measuring the charging level of the containers C, the storage tanks 14, 15, 16 and/or the bottles 17, 18 and/or sensors for measuring the conditions of the stored and used liquid can be provided.

In a most preferred embodiment, the storage tanks 14, 15, 16 are fluidly connected to the respective container C, which container C therefore preferably comprises an inlet I (for fresh, clean or cleaned liquid) and an outlet O (for used liquid) as examplarily and schematically shown for container C2 in figure 3. In this case, the control unit can control the charging and discharging of the respective fluid into and out of a container C. Hence, the automatisation is increased so that human errors can be reduced. Further, as the respective fluid can simply and automatically be provided and/or replaced during the process, the quality of the process can be maintained.

The processor P can also be provided with bottles 17, 18 being filled with staining liquids like hematoxylin and/or eolin, respectively. The bottles 17, 18 are fitted with a presetable dosing system for the solution therein. In this case, the containers C3, C5 holding the staining liquid can be provided with a sensor connected to the control unit for measuring the charging level of the respective container C3, C5. In case the filling level reaches a predetermined level, an audible and/or visible alarm is output to advise the user that the respective container needs to be refilled. Then, the operator can refill the containers C3, C5 using the bottles 17, 18.

The processor P can further comprise an exhaust system 20. The exhaust system 20 is arranged such that any vapours escaping during a processing of the samples can be eliminated. As can be seen in figures 1a and 1b, the exhaust system 20 is preferably arranged over the containers C and extend over the whole width of the container C arrangement. However, any other suitable design and arrangement is possible as long as the vapours escaping during the processing of the samples are eliminated to avoid a damage to health of the operator.

The processor P further comprises a motorized actuator 10 being designed for transferring the samples between and in and out of said containers C.

According to the embodiment of figures 1a and 1b, the actuator 10 comprises a rotatable shaft 12 extending along and being rotatable around the vertical axis A. A holder 11 of the actuator 10 is fixed to the shaft 12 such that the holder 11 rotates with the shaft 12. The holder 11 extends from the shaft 12, preferably in a horizontal direction, such that it extends above the containers C. The holder 11 is designed to be movable along the vertical axis A. Therefore, either the holder 11 is connected to the shaft 12 in a vertically movable manner to be moved up and down along the shaft 12, or the holder 11 and the shaft 12 are fixed together such that the holder 11 is moved along the vertical axis A by vertically retracting and extending or moving the shaft 12 in the vertical direction. However, the actuator 10 is not limited to the embodiment as long as it enables the samples 2 to be (automatically) transferred between and into and out of the containers C.

It is noted that the design of the actuator 10 is not limited to the embodiment as long as a transfer between two containers C can preferably be performed via a relative rotation of the actuator 10 relative to the containers C. Hence, the time for the processing carried out can be minimized, particularly by arranging the containers C about a rotatable actuator 10, which can thus reach each container C by a simple rotational movement.

The (glass) slides with frozen slice of tissue of a biospecimen (frozen section 2) are preferably arranged on a carrier 1, which carrier 1 can be removably attached to the actuator 10, particularly the holder 11 of the actuator 10, as shown in figures 1a and 1b. It is thus easy to provide the samples to the processor P as they can simply be arranged on said carrier 1 (e.g. via glass slides) independent from the actuator 10 and then attached to the actuator 10 afterwards. Moreover, the exposed holder 11 further simplifies the attachment of the carrier 1 and also the movement of the carrier 1 into and out of the containers C.

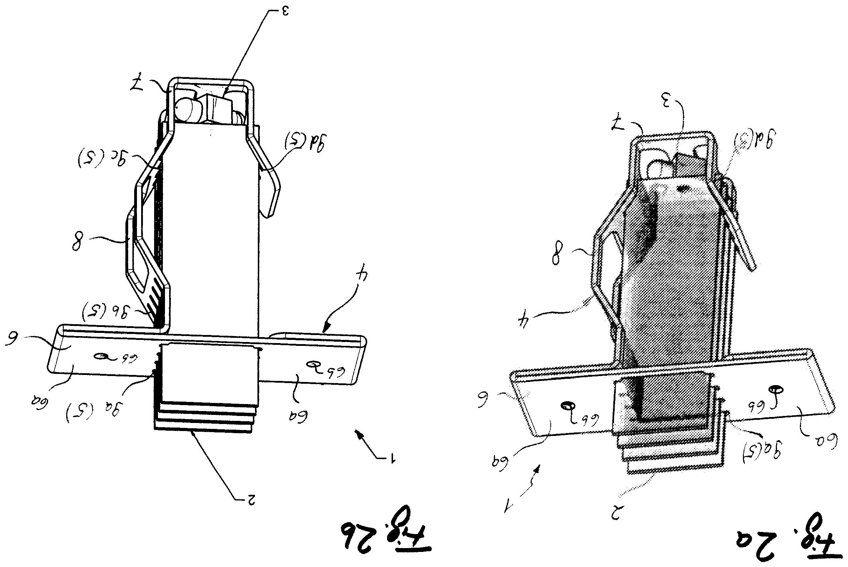

In figures 2a and 2b, a carrier 1 for the frozen slice of tissue of a biospecimen, particularly the frozen sections 2, according to the invention is shown. The carrier 1 comprises a frame 4 having a holding portion 5 for holding the samples. Therefore, the sliced organic biological samples can be arranged on a glass slide or the like thus forming the frozen section 2. The carrier 1 is preferably made of stainless steel or other suitable material for holding at least one, preferably one to four frozen samples.

According to a preferred embodiment, the frame 4 is made of a single element by forming or casting. Hence, the carrier 1 can simply be produced at low costs. Preferably, the frame 4 comprises a top portion 6, a bottom portion 7 and a connection portion 8 connecting the top portion 6 and the bottom portion 7. In the top portion 6 and the bottom portion 7 there are provided slits 9a, 9b, 9c, 9d forming the holding portion 5. The samples or better the frozen section 2 can thus simply be slid into the slits 9a, 9b, 9c, 9d of the holding portion 5 to be held by the carrier 1.

The top portion 6 of the frame 4 preferably comprises a flange portion 6a for attaching the carrier 1 to the processor P, particularly to the actuator 10 or the holder 11 of the actuator 10. Therefore, the flange portion 6a comprises holes 6b through which fixing means, like screws or bolts, can pass to be screwed or fixed to the actuator 10. The flange portion 6a can also be attached to the actuator 10 (or holder 11) in any other way known by the skilled person, like screwing, clamping, snap fitting, fixing with a bayonet fitting or the like. By means of the flange portion 6a, a standardized connection between the carrier 1 on the one side and the actuator 10 of the processor P on the other side can be provided.

A magnetic stirrer or magnetic stirring means 3 is rotatably or rotary attached to the frame 4 of the carrier 1. The magnetic stirring means 3 is designed to be driven by an external magnetic drive. Such a magnetic drive can, for instance, be arranged in the processor P, preferably below the containers C, such that the liquids inside the containers C are stirred every time a sample is transferred into a container. Hence, there is no need to place a stirring means in each of the containers while the immersed surface of the samples are subjected to a homogeneous solution concentration at a specific temperature in every container.

In a preferred embodiment, the magnetic stirrer 3 is built in or provided at the bottom of the carrier 1, preferably provided at the bottom portion 7 of the frame 4, preferably below the holding portion 5. It is thus guaranteed that the stirring means 3 is always in contact with the fluid in a container C, in which the carrier 1 (or the frozen sections 2 arranged on the carrier 1) is immersed.

According to the invention, the carrier 1 does not need to be attached or attachable to the processor P but can also be manually moved into and out of at least one container C, preferably at least two (successive) containers C to be manually moved or transferred from one container C to the next (successive) container C. In particular, the frozen section 2 can (successively) be moved into and out of at least one, preferably at least two containers C, C1-C8, and the magnetic stirring means 3 is moved along with the frozen section 2 (e.g. by means of the rotary fixation of the magnetic stirring means 3 to the carrier 1) and the magnetic stirring means 3 is driven by an external magnetic drive at least when entering at least one of the containers C, e.g., as described above. It is thus possible to attain the advantages of stirring independent from the movement or transferral of the frozen section 2 being carried out manually or automatically.

The containers C of the processor P are covered by a cover 13, preferably by a common cover (see figure 1a). Said common cover 13 has an opening 13a. The cover 13 is relatively rotatable to the containers C such that the opening 13a can be placed in a way to enable the samples or frozen sections 2 on the object carrier 1 to be transferred into and out of the respective container via said opening 13a.

In a preferred embodiment, the cover 13 rotates along with the actuator 10, e.g. by being fixed to the shaft 12 to rotate along with the shaft 12 and thus also with the holder 11. Hence, the opening 13a and the carrier 1 always remain in a fixed position relative to each other during the relative rotation of the actuator 10 and the containers C. Said fixed position is, of course, a position to enable the carrier 1, i.e. the frozen sections 2 on the carrier 1, to be transferred into and out of the respective container via said opening 13a by simply moving the carrier 1 along the vertical axis A. By use of such a common cover 13 having the described opening 13a, the closure or sealing of the containers C, preferably the containers C not used for the respective processing step, can be simply attained while at the same time providing an access for the sample to the container C to be used.

Preferably, the containers C1 to C8 each comprise an opening O at the side at which the carrier 1 is about to enter the respective container C1 to C8, preferably at its top portion. As can be seen in figure 1b, each of the containers C1 to C8 can comprise an opening O which preferably matches the design and size of the opening 13a in the cover 13. Hence, when both the opening 13a of the cover 13 and the opening O of one of the containers C1 to C8 are arranged in a coaxial manner, e.g. by rotating the actuator 10 along with the cover 13, the carrier 10 can be simply transferred into and out of the respective container C1 to C8 via both the openings 13a and O.

To close the opening 13a during a processing step, i.e. in case the carrier 1 has been lowered and is thus positioned in a respective container C, the carrier 1 or the holder 11 can be provided with a closing member closing the opening 13a. For example, the top portion 6 of the frame 4 of the carrier 1, preferably the flange portion 6a, can be designed to form the closing member closing the opening 13a in a lowered state of the carrier 1, i.e. a lowered state of the actuator 1 or holder 11.

It is noted that the invention is not limited to the cover as shown in figure 1a. There can also be provided a cover being placed above the holder 11, which covers the containers C when lowering the actuator 10. Further, the cover covering the containers C can also comprise an opening 13a for each of the containers C1 to C8; in this case, the cover is not rotatably connected to the shaft 12. In general, the cover 13 must be designed to cover the containers C at least during a process step or the whole sequence while enabling the carrier 1 holding the samples or frozen sections 2 to enter the containers C.

The processor P further comprises the control unit already mentioned above. The control unit controls the actuator 10, i.e. the transfer and the time duration during which the samples or frozen sections 2 are positioned in said containers C. Further, the control unit can control the charging and discharging of fluids in the containers C and the exhaust system 20 as already described above.

For the control of the system, i.e. the processor P, a touch screen terminal 19 can be provided. On the touch screen terminal, there can also be shown visible alarms and the like. For audible alarms, a loudspeaker can be provided as well.

In the following, a sequence of a process of frozen slices of tissue of a biospecimens or frozen sections 2 is described.

At the beginning of the sequence, the operator, after freezing the specimens and preparing the frozen sections (i.e frozen slices of tissue of a biospecimen adhering to a glass slide), charges the samples (preferably provided on a glass slide, i.e. forming the frozen sections 2) to the holding portion 5 of the carrier 1. The tissue slices preferably having a thickness of between 1µm and 50µm, more preferred between 2µm and 10µm.

The carrier 1 is then introduced in the automatic processor P by attaching the flange portion 6a to the actuator 10, more precisely to the holder 11 of the actuator 10. The carrier 1 is thus connected to the shaft 12 of the actuator 10 through the arm or holder 11. The shaft 12 can rotate about 360° and the shaft 12 or at least the holder 11 can also slide up and down. The cover 13 is preferably connected to the shaft 12 for the rotating movement, but is independent from the vertical movement such that an opening 13a in the cover 13 remains in a fixed position relative to the shaft 12 and thus also with the carrier 1 during a rotation of the actuator 10 such that the sliced samples on the object carrier 1 are always enabled to be transferred into and out of the respective container C via said opening 13a.

Around the shaft 12 there is positioned a predetermined number of containers C according to the protocol sequence, preferably three to ten, most preferred eight containers C1-C8.

In operation the histotechnician thus loads the carrier 1 with the frozen sections 2 to the actuator 10 and starts the procedure, preferably through terminal 19.

The control unit now controls the transfer and the time duration during which the samples or frozen sections 2 are in said containers C by controlling the actuator 10 holding the samples or frozen sections 2. The sequence is then carried out automatically until it is completed. The transfer between two containers C is preferably performed via a relative rotation of the actuator 10 relative to the containers C, wherein preferably the containers C are distributed over the circumference of a circle. Preferably, a visible and audible alarm will advise the user that the sequence has been completed.

In the following, a sequence of the method according to the invention for processing frozen slices of tissue of a biospecimens arranged on a carrier, will be described with reference to figure 3.

After the sequence has been initiated, the actuator 10, i.e. the shaft 12 positions the carrier 1 over the first container C1 with the fixative preferably kept at 37°C. The shaft 12 or at least the holder 11 will drop down immersing the carrier 1 holding the samples or frozen sections 2 in the heated solution for a preset time (step 1). As described above, the cover 13 has an opening 13a through which the carrier 1 slides into the respective container C while at the same time keeping a lid on all containers C.

Step 1 is thus carried out in the heated container C1 preferably provided with the temperature sensor S and connected to the control unit for keeping the temperature at a predefined level. Preferably, the temperature is set between 20 and 50°C, more preferred to 37°C. The control of temperature allows a precise standardization of the process otherwise difficult or even impossible to be achieved due to the variation in temperature in different laboratory environments. The "higher than room temperature" processing temperature allows consistence of results and enhancement of the speed of reaction approximately double than at room temperature (Arrhenius constant). A time sequence between 1 and 120 seconds, preferably 60 seconds is set for this stage where the fixation, dehydration and extraction of lipids take place by immersing the frozen sections 2 in the fixative (preferably an alcohol based fixative, more preferred a fixative having the composition of FineFIX).

When the time sequence of step 1 has elapsed, the frozen sections 2 on the object carrier 1 are automatically transferred out of the first container C1 to another container C being next in the predetermined sequence. The next container is container C3 but can optionally be container C2.

In optional step 2 the sliced samples 2 on the object carrier 1 are transferred into the container C2 holding a rinsing liquid like (demineralized) water. The step 2 consists of a rinsing of the frozen section 2 in said demineralized water, preferably agitated by stirring. As schematically depicted in figure 3, the water is preferably changed every process to standardize conditions. Therefore, the water can be discharged to the storage tank 15, and cleaned demineralized water can be charged from the storage tank 14 to the container C2 via a fluid connection, e.g. a pipe. The time sequence is set between 5 and 20 seconds, preferably 10 seconds.

When the time sequence of step 2 has elapsed, the frozen section 2 on the object carrier 1 are automatically transferred out of the container C2 to the container C3 being next in the predetermined sequence.

In step 3 the frozen sections 2 on the object carrier 1 are transferred into the container C3 holding a staining liquid like hematoxilin. A time sequence is set between 5 and 60 seconds, preferably 30 seconds.

When the time sequence of step 3 has elapsed, the frozen section 2 on the object carrier 1 are automatically transferred out of the container C3 to another container C being next in the predetermined sequence. The next preferred container is container C5 but can optionally be container C4.

In optional step 4 the frozen section 2 on the object carrier 1 are transferred into the container C4 holding a rinsing liquid like demineralized water. Step 4 is similar to step 2 to which is hereby referred. A time sequence is set between 5 and 60 seconds, preferably 10 seconds.

When the time sequence of step 4 has elapsed, the frozen section 2 on the object carrier 1 are automatically transferred out of the container C4 to the optional container C5 being next in the predetermined sequence.

In step 5 the frozen section 2 on the object carrier 1 are transferred into the container C5 holding a staining liquid like eosin. A time sequence is set between 2 and 20 seconds, preferably 10 seconds.

When the time sequence of step 5 has elapsed, the sliced samples on the object carrier 1 are automatically transferred out of the container C5 to the container C6 being next in the predetermined sequence.

In step 6 the frozen section 2 on the object carrier 1 are transferred into the container C6 holding a dehydrating liquid like absolute alcohol, e.g. ethanol, for dehydration. A time sequence is set between 2 and 30 seconds, preferably 10 seconds.

When the time sequence of step 6 has elapsed, the sliced samples 2 on the object carrier 1 are automatically transferred out of the container C6.

Optionally, the sequence can then comprise further steps. For example, the dehydration step 6 can comprises at least two dehydration steps for dehydrating the frozen sections 2 preferably in different containers holding a dehydrating liquid, respectively. The two dehydration steps can also be carried out in the same container C6, wherein in said case the used dehydration liquid can be discharged from container C6 and fresh dehydration liquid can be charged to the container C6 between the dehydration steps. In any case, the sliced samples, i.e. the frozen sections 2 on the object carrier 1 are automatically transferred out of the container C6, to the container being next in the predetermined sequence, which container can either be container C6 again or container C7.

In step 7 the frozen sections 2 on the object carrier 1 are transferred into the container C6 or C7 holding a dehydrating liquid like absolute alcohol, e.g. ethanol, for dehydration. A time sequence is set between 2 and 30 seconds, preferably 10 seconds.

When the time sequence of step 6 or any following dehydration step has elapsed, the frozen sections 2 on the object carrier 1 are automatically transferred out of the container C6 or C7 and to the next optional container C8 in the predetermined sequence.

In step 8 the frozen sections 2 on the object carrier 1 are transferred into the container C8 holding a clearing liquid like a compound to prepare the sample for coverslipping, such as isoparaffin or xylene or others suitable compounds. A time sequence is set between 2 and 30 seconds, preferably 10 seconds.

When the time sequence of the last step of the sequence has elapsed, the frozen sections 2 on the object carrier 1 are automatically transferred out of the respective container, e.g container C8. The sequence is then completed. In this case, preferably a visible and/or an audible alarm will advise the user that the sequence has been completed.

It is noted that in at least one, preferably in all of the steps 1 to 8 the respective liquid or solution in the container C1 to C8 is (magnetically) stirred. This is depicted in figure 3 by the circular arrow. Therefore, the carrier 1 is provided by the magnetic stirrer 3 which is activated by a magnetic drive of the processor P, preferably arranged below the containers C, at least below the container C in which stirring is intended. The magnetic drive can also be controlled by the control unit to accurately activate the magnetic stirrer 3 only when the carrier 1 holding the magnetic stirrer 3 being transferred or placed in the respective container C.

The above described method at least comprising the steps 1, 3, (5), 6, and (8) will reduce the need for a second surgery due to the higher quality of morphological results obtained. The method will enable operators with different skills and experiences to standardize and document the complete protocol for an enhanced consistency and repeatability of results.

It is further noted that the above described steps do not need to be carried out by automatically transferring the frozen section 2 between the containers C. It is also possible to manually (or automatically) move the frozen section 2 into and out of at least one, preferably at least two successive containers C, and a magnetic stirring means is moved along with the frozen section 2 such that the magnetic stirring means 3 is driven by an external magnetic drive at least when entering at least one of the containers C.

The method according to the invention for processing a frozen slice of a tissue of a biospecimen mounted on or adhered to a glass slide, i.e. forming a frozen section 2, and arranged on a carrier 1 may also comprise at least one or more of the above-described steps, wherein at least the step of immersing the frozen tissue slices in a fixative solution (preferably an alcohol based fixative, more preferred a fixative having the composition of FineFIX) is carried out at a temperature preset above room temperature, preferably between 20°C to 50°C, more preferred between 30°C and 40°C, even more preferred at 37°C. The immersing step is preferably carried out by moving the frozen section 2 into and out of the container C1 being accordingly heated or heatable. The before-mentioned step can be followed by other steps as described above as, for instance, rinsing, staining, dehydrating, and/or clearing steps. In this case, the frozen section 2 (on the carrier 1) is transferred between and into and out of at least the container C1 holding the fixative solution (preferably an alcohol based fixative, more preferred a fixative having the composition of FineFIX), and preferably also at least one or more successive containers C2-C8 holding water, staining solutions, dehydrating solutions, and/or clearing solutions. The transferral can be carried out manually or automatically. Further, stirring can be carried out in at least one of the containers/ steps in the above-described manner.

The invention is not limited to the above described embodiments as long as being covered by the subject-matter of the following claims. For example, the actuator is not limited to the depicted and described embodiment as long as the actuator enables a transfer of the samples between and in and out of the containers. Also, stirring can be carried out other than by magnetic stirring known in the art, also including the arrangement of (electrical) stirrers arranged in each of the containers C.

## Claims

1. A method for processing frozen slices of tissue of biospecimens mounted on or adhered to glass slides to form a frozen section (2), and arranged on a carrier (1) comprising a frame (4) having a holding portion (5) for holding the tissue slices or frozen sections (2),
the tissue slices having a thickness of between 1µm and 50 µm,
the method comprising the following steps:
a.) immersing the frozen tissue slices in a fixative,
b.) staining the tissue slice,
c.) dehydrating the tissue slice, and
d.) clearing the tissue slice
wherein steps a.) to d.) are performed by automatically transferring the frozen sections (2) on the carrier (1) between and into and out of at least a container (C1) holding the fixative, at least one container (C3, C5) holding a staining solution, a container (C6, C7) holding a dehydrating solution, and a container (C8) holding a clearing solution,
wherein the transfer and the time duration during which the tissue slices are in said containers (C, C1-C8) is controlled by a control unit controlling an actuator (10) holding the tissue slices, and
wherein the carrier (1) comprises a magnetic stirring means (3) being rotary attached to the frame (4) and which is driven by an external magnetic drive.

2. The method of claim 1, wherein the tissue slices have a thickness of between 2µm and 10µm.

3. The method of claim any one of the above claims, wherein the fixative is an alcohol based fixative.

4. The method of any of the preceding claims,
wherein in at least one of the steps a.) to d.) the respective liquid in the container (C, C1-C8) is magnetically stirred.

5. The method of any of the preceding claims,
wherein the temperature in the container (C1) holding the fixative is preset at a temperature above room temperature, preferably set between 20-50°C, more preferably set at 37°C.

6. The method of any of the preceding claims,
wherein the transfer between two containers (C, C1-C8) is performed via a relative rotation of the actuator (10) relative to the container (C, C1-C8), wherein the containers (C, C1-C8) are distributed over the circumference of a circle, and wherein the containers (C, C1-C8) are covered by a common cover (13) having an opening (13a) to enable the frozen section (2) on the carrier (1) to be transferred into and out of the respective container (C, C1-C8) via said opening (13a), and the cover (13) rotates along with the actuator (10) such that the opening (13a) and the carrier (1) remain in a fixed position relative to each other during the relative rotation of the actuator (10) and the container (C, C1-C8).

7. The method of any of the preceding claims,
wherein between steps a.) and b.) and/or between the different staining steps of step b.) the tissue slices are rinsed in further container(s) (C2, C4) holding water, preferably demineralised water.

8. The method of any of the preceding claims,
wherein step c.) comprises at least two dehydration steps for dehydrating the tissue slices in different containers (C6, C7) holding a dehydrating solution, respectively.

9. The method of any of the preceding claims,
wherein the clearing solution in step d.) is a compound to prepare the tissue slice for coverslipping, such as isoparaffin or xylene, before examination at a microscope.

10. The method of any of the preceding claims,
wherein the containers (C, C1-C8) are fluidly connected to at least one storage tank (14-16) for at least one of a fixative, a staining solution, a dehydrating solution, water and/or a clearing solution for charging and/or discharging the respective container (C, C1-C8) with the fixative, the at least one staining solution, dehydrating solution, water and/or clearing solution,
wherein the charging and discharging are controlled by the control unit.

11. A processor (P) for processing frozen slices of tissue of biospecimens,
the processor (P) having:
- a container (C1) having a fixative, ,
- at least one container (C3, C5) having staining solutions,
- a container (C6, C7) having a dehydrating solution, and
- a control unit,
- a motorized actuator (10), controlled by the control unit, designed for transferring the tissue slices between and in and out of said containers (C, C1-C8)
- a carrier (1) adapted for glass slides with frozen slices of tissue of a biospecimen, wherein the carrier (1) is removably attached to the actuator (10) and comprises a frame (4) having a holding portion (5) for holding the tissue slices or frozen sections (2), wherein a magnetic stirring means (3) is rotary attached to the frame (4), which magnetic stirring means (3) is designed to be driven by an external magnetic drive.

12. The processor (P) of claim 11, wherein the fixative is an alcohol based fixative.

13. The processor (P) of claim 11 or 12, further comprising at least one of the following containers (C):
- at least one container (C2, C4) having water, preferably demineralized water, and
- at least one additional container having a dehydrating solution (C7, C6).

14. The processor (P) of any one of claims 11 to 13,
wherein the containers (C, C1-C8) are distributed over the circumference of a circle and around a vertical axis (A), and
wherein the motorized actuator (10) comprises a rotatable shaft (12) extending along and being rotatable around the vertical axis (A).

15. The processor (P) of any one of claims 11 to 14,
wherein the tissue slices are mounted on or adhered to glass slides to form frozen sections (2), which are arranged on the carrier (1), and wherein the carrier (1) is removably attached to a holder (11) of the actuator (10) extending from the shaft (12) and above the containers (C, C1-C8), and the holder (11) is designed to be movable along a vertical axis (A).

16. The processor (P) of any one of claims 11 to 15,
wherein the processor (P) further comprises at least one storage tank (14-16) for at least one of a fixative, staining solution(s), a dehydrating solution, water, and a clearing solution, the storage tank(s) (14-16) being fluidly connected to the respective container (C, C1-C8).

17. The processor (P) of any one of claims 11 to 16,
wherein the processor (P) further comprises an exhaust system (20) to eliminate vapours escaping during a processing of the tissue slices.

18. Carrier (1) for frozen slices of tissue of biospecimens comprising:
a frame (4) having a holding portion (5) for holding the tissue slices or for holding frozen sections (2) formed by the tissue slices mounted on or adhered to glass slides,
wherein a magnetic stirring means (3) is rotary attached to the frame (4), which magnetic stirring means (3) is designed to be driven by an external magnetic drive.

19. Carrier (1) of claim 18,
wherein the magnetic stirring means (3) is provided at a bottom portion (7) of the frame (4), preferably below the holding portion (5).

20. Carrier (1) of any one of claims 18 or 19,
wherein a top portion (6) of the frame (4) comprises a flange portion (6a) for attaching the carrier (1) to a processor (P).

## Patentansprüche

1. Verfahren zum Verarbeiten von gefrorenen Gewebescheiben von biologischen Proben, die an Glasscheiben angebracht oder angeklebt sind, um einen Gefrierschnitt (2) zu bilden, und auf einem Träger (1) angeordnet sind, der ein Gestell (4) aufweist, das einen Haltebereich (5) zum Halten der Gewebescheiben oder der Gefrierschnitte (2) aufweist, wobei die Gewebescheiben eine Stärke zwischen 1 µm and 50 µm haben,
wobei das Verfahren die folgende Schritte aufweist:
a.) Eintauchen der gefrorenen Gewebescheiben in ein Fixiermittel,
b.) Färben der Gewebescheibe,
c.) Dehydrieren der Gewebescheibe, und
b.) Reinigen der Gewebescheibe,
wobei die Schritte a.) bis d.) durchgeführt werden, in dem die Gefrierschnitte (2) am Träger (1) automatisch zwischen und in und aus wenigstens einem Behälter (C1), der das Fixiermittel enthält, wenigstens einem Behälter (C3, C5), der eine Färbelösung enthält, einem Behälter (C6, C7), der eine Dehydrierungslösung enthält, und einem Behälter (C8), der eine Reinigungslösung enthält, transportiert werden,
wobei die Übertragung und die zeitliche Dauer, während der sich die Gewebescheiben in den Behältern (C, C1-C8) befinden, durch eine Steuereinheit gesteuert wird, die einen Aktuator (10) steuert, der die Gewebescheiben hält, und
wobei der Träger (1) ein magnetisches Rührmittel (3) aufweist, das rotierbar am Gestell (4) angebracht ist und das durch einen externen Magnetantrieb angetrieben wird.

2. Verfahren nach Anspruch 1, wobei die Gewebescheiben eine Stärke von zwischen 2 µm und 10 µm haben.

3. Verfahren nach einem der vorhergehenden Ansprüche, wobei das Fixiermittel ein alkoholbasiertes Fixiermittel ist.

4. Verfahren nach einem der vorhergehenden Ansprüche,
wobei in wenigstens einem von den Schritten a.) bis d.) die jeweilige Flüssigkeit im Behälter (C, C1-C8) magnetisch umgerührt wird.

5. Verfahren nach einem der vorhergehenden Ansprüche,
wobei die Temperatur im Behälter (C1), der das Fixiermittel enthält, auf eine Temperatur über der Raumtemperatur voreingestellt ist, vorzugsweise zwischen 20 - 50 °C eingestellt ist, bevorzugter auf 37 °C eingestellt ist.

6. Verfahren nach einem der vorhergehenden Ansprüche,
wobei der Transport zwischen zwei Behältern (C, C1-C8) über eine diesbezügliche Rotation des Aktuators (10) bezüglich des Behälters (C, C1-C8) durchgeführt wird, wobei die Behälter (C, C1-C8) über den Umfang eines Kreises verteilt sind, und wobei die Behälter (C, C1-C8) von einer gemeinsamen Abdeckung (13) abgedeckt werden, die eine Öffnung (13a) hat, um zu ermöglichen, dass der Gefrierabschnitt (2) am Träger (1) in und aus dem jeweiligen Behälter (C, C1-C8) über die Öffnung (13a) transportiert wird, und die Abdeckung (13) zusammen mit dem Aktuator (10) so rotiert, dass die Öffnung (13a) und der Träger (1) in einer feststehenden Position in Bezug zueinander während der relativen Rotation des Aktuators (10) und des Behälters (C, C1-C8) bleiben.

7. Verfahren nach einem der vorhergehenden Ansprüche,
wobei zwischen den Schritten a.) und b.) und/oder zwischen den verschiedenen Färbeschritten von Schritt b.) die Gewebescheiben in einem/in weiteren Behälter(n) (C2, C4), der/die Wasser enthält/enthalten, vorzugsweise demineralisiertes Wasser, gespült werden.

8. Verfahren nach einem der vorhergehenden Ansprüche,
wobei Schritt c.) wenigstens zwei Dehydrierungsschritte aufweist, um die Gewebescheiben in jeweils verschiedenen Behältern (C6, C7), die eine Dehydrierungslösung enthalten, zu dehydrieren.

9. Verfahren nach einem der vorhergehenden Ansprüche,
wobei die Reinigungslösung in Schritt d.) eine Verbindung, wie Isoparaffin und Xylol ist, um die Gewebescheibe vor der Untersuchung in einem Mikroskop für das Abdecken (Coverslipping) vorzubereiten.

10. Verfahren nach einem der vorhergehenden Ansprüche,
wobei die Behälter (C, C1-C8) in Fluidverbindung mit wenigstens einem Aufbewahrungsbehälter (14-16) für wenigstens ein Fixiermittel, eine Färbelösung, eine Dehydrierungslösung, Wasser und/oder einer Reinigungslösung zum Befüllen und/oder Entleeren des jeweiligen Behälters (C, C1-C8) mit dem Fixiermittel, der wenigstens einen Färbelösung, Dehydrierungslösung, Wasser und/oder Reinigungslösung stehen,
wobei das Befüllen und Entleeren durch die Steuereinheit gesteuert wird.

11. Prozessor (P) zum Verarbeiten gefrorener Gewebescheiben von biologischen Proben, wobei der Prozessor (P) aufweist:
- einen Behälter (C1), der ein Fixiermittel aufweist,
- wenigstens einen Behälter (C3, C5), der Färbelösungen aufweist,
- ein Behälter (C6, C7), der eine Dehydrierungslösung aufweist, und
- eine Steuereinheit,
- einen motorisierten Aktuator (10), der von der Steuereinheit gesteuert wird, der dazu ausgestaltet ist, die Gewebescheiben zwischen und in und aus den Behältern (C, C1-C8) zu transportieren,
- einen Träger (1), der für Glasscheiben mit gefrorenen Gewebescheiben einer biologischen Probe angepasst ist, wobei der Träger entfernbar am Aktuator (10) angebracht ist und ein Gestell (4) aufweist, das einen Haltebereich (5) zum Halten der Gewebescheiben oder Gefrierschnitte (2) aufweist, wobei ein magnetisches Rührmittel (3) rotierbar am Gestell (4) angebracht ist, und wobei das magnetische Rührmittel (3) gestaltet ist, um von einem externen Magnetantrieb angetrieben zu werden.

12. Prozessor (P) nach Anspruch 11, wobei das Fixiermittel ein alkoholbasiertes Fixiermittel ist.

13. Prozessor (P) nach Anspruch 11 oder 12, der weiterhin wenigstens einen von den folgenden Behältern (C) aufweist:
- wenigstens einen Behälter (C2, C4), der Wasser, vorzugsweise demineralisiertes Wasser aufweist, und
- wenigstens einen weiteren Behälter, der eine Dehydrierungslösung (C7, C6) aufweist.

14. Prozessor (P) nach einem der Ansprüche 11 bis 13,
wobei die Behälter (C, C1-C8) über den Umfang eines Kreises und um eine vertikale Achse (A) verteilt sind, und
wobei der motorisierte Aktuator (10) eine rotierbare Welle (12) aufweist, die entlang der vertikalen Achse (A) verläuft und darum rotierbar ist.

15. Prozessor (P) nach einem der Ansprüche 11 bis 14,
wobei die Gewebescheiben an Glasscheiben angebracht oder angeklebt sind, um Gefrierschnitte (2) zu bilden, die am Träger (1) angeordnet sind, und
wobei der Träger (1) entfernbar an einer Halterung (11) des Aktuators (10) angebracht ist, der sich von der Achse (12) und über die Behälter (C, C1-C8) erstreckt, und die Halterung (11) gestaltet ist, um entlang einer vertikalen Achse (A) bewegbar zu sein.

16. Prozessor (P) nach einem der Ansprüche 11 bis 15, wobei der Prozessor (P) weiterhin wenigstens einen Aufbewahrungsbehälter (14-16) für wenigstens eines von einem Fixiermittel, Färbelösung(en), einer Dehydrierungslösung, Wasser und einer Reinigungslösung aufweist, wobei der/die Aufbewahrungsbehälter (14-16) in Fluidverbindung mit dem jeweiligen Behälter (C, C1-C8) stehen.

17. Prozessor (P) nach einem der Ansprüche 11 bis 16,
wobei der Prozessor (P) weiterhin ein Absaugsystem (20) aufweist, um Dämpfe zu entfernen, die während einer Verarbeitung der Gewebescheiben entweichen.

18. Träger (1) für gefrorene Gewebescheiben von biologischen Proben, der aufweist:
ein Gestell (4), das einen Haltebereich (5) zum Halten der Gewebescheiben oder zum Halten der Gefrierschnitte (2) aufweist, die durch die an Glasscheiben angebrachten oder angeklebten Gewebescheiben ausgebildet sind,
wobei ein magnetisches Rührmittel (3) rotierbar am Gestell (4) angebracht ist, wobei das magnetische Rührmittel (3) ausgestaltet ist, um von einem externen Magnetantrieb angetrieben zu werden.

19. Träger (1) nach Anspruch 18,
wobei das magnetische Rührmittel (3) an einem Bodenbereich (7) des Gestells (4) vorgesehen ist, vorzugsweise unter dem Haltebereich (5).

20. Träger (1) nach einem der Ansprüche 18 oder 19,
wobei ein oberer Bereich (6) des Gestells (4) einen Flanschbereich (6a) aufweist, um den Träger (1) an einem Prozessor (5) anzubringen.

## Revendications

1. Procédé de traitement de tranches congelées de tissu de bioéchantillons montés sur ou collés à des tranches de verre pour former une section congelée (2), et agencés sur un support (1) comprenant un cadre (4) ayant une partie de maintien (5) pour maintenir les tranches de tissu ou sections congelées (2),
les tranches de tissu ayant une épaisseur comprise entre 1 µm et 50 µm,
le procédé comprenant les étapes suivantes :
a.) immersion des tranches de tissu congelées dans un fixateur,
b.) coloration de la tranche de tissu,
c.) déshydratation de la tranche de tissu, et
d.) nettoyage de la tranche de tissu
dans lequel les étapes a.) à d.) sont réalisées par transfert automatique des sections congelées (2) sur le support (1) entre et dans et hors d'au moins un récipient (C1) contenant le fixateur, au moins un récipient (C3, C5) contenant une solution de coloration, un récipient (C6, C7) contenant une solution de déshydratation, et un récipient (C8) contenant une solution de nettoyage,
dans lequel le transfert et la durée pendant laquelle les tranches de tissu sont dans lesdits récipients (C, C1-C8) sont commandés par une unité de commande commandant un actionneur (10) tenant les tranches de tissu, et
dans lequel le support (1) comprend un moyen d'agitation magnétique (3) qui est fixé rotatif au cadre (4) et qui est entraîné par un entraînement magnétique externe.

2. Procédé selon la revendication 1, dans lequel les tranches de tissu ont une épaisseur comprise entre 2 µm et 10 µm.

3. Procédé selon l'une quelconque des revendications ci-dessus, dans lequel le fixateur est un fixateur à base d'alcool.

4. Procédé selon l'une quelconque des revendications précédentes,
dans lequel à au moins l'une des étapes a.) à d.) le liquide respectif dans le récipient (C, C1-C8) est magnétiquement agité.

5. Procédé selon l'une quelconque des revendications précédentes,
dans lequel la température dans le récipient (C1) contenant le fixateur est prédéfinie à une température supérieure à la température ambiante, de préférence définie entre 20 et 50 °C, de manière davantage préférée définie à 37 °C.

6. Procédé selon l'une quelconque des revendications précédentes,
dans lequel le transfert entre deux récipients (C, C1-C8) est réalisé via une rotation relative de l'actionneur (10) par rapport au récipient (C, C1-C8), dans lequel les récipients (C, C1-C8) sont répartis sur la circonférence d'un cercle, et dans lequel les récipients (C, C1-C8) sont couverts par un couvercle (13) commun ayant une ouverture (13a) pour permettre à la section congelée (2) sur le support (1) d'être transférée dans et hors du récipient respectif (C, C1-C8) via ladite ouverture (13a), et le couvercle (13) effectue une rotation conjointement à l'actionneur (10) de telle sorte que l'ouverture (13a) et le support (1) restent dans une position fixe l'un par rapport à l'autre durant la rotation relative de l'actionneur (10) et du récipient (C, C1-C8).

7. Procédé selon l'une quelconque des revendications précédentes,
dans lequel entre les étapes a.) et b.) et/ou entre les différentes étapes de coloration de l'étape b.) les tranches de tissu sont rincées dans un ou des autres récipients (C2, C4) contenant de l'eau, de préférence de l'eau déminéralisée.

8. Procédé selon l'une quelconque des revendications précédentes,
dans lequel l'étape c.) comprend au moins deux étapes de déshydratation pour déshydrater les tranches de tissu dans différents récipients (C6, C7) contenant une solution de déshydratation, respectivement.

9. Procédé selon l'une quelconque des revendications précédentes,
dans lequel la solution de nettoyage à l'étape d.) est un composé pour préparer la tranche de tissu pour l'installation d'une lamelle couvre-objet, par exemple l'isoparaffine ou le xylène, avant l'examen au microscope.

10. Procédé selon l'une quelconque des revendications précédentes,
dans lequel les récipients (C, C1-C8) sont fluidiquement raccordés à au moins un réservoir de stockage (14-16) pour au moins l'un d'un fixateur, d'une solution de coloration, d'une solution de déshydratation, d'eau et/ou d'une solution de nettoyage pour charger et/ou décharger le récipient respectif (C, C1-C8) du fixateur, de l'au moins une solution de coloration, solution de déshydratation, eau et/ou solution de nettoyage,
dans lequel la charge et la décharge sont commandées par l'unité de commande.

11. Processeur (P) pour le traitement de tranches congelées de tissu de bioéchantillons,
le processeur (P) ayant :
- un récipient (C1) ayant un fixateur,
- au moins un récipient (C3, C5) ayant des solutions de coloration,
- un récipient (C6, C7) ayant une solution de déshydratation, et
- une unité de commande,
- un actionneur motorisé (10), commandé par l'unité de commande, conçu pour transférer les tranches de tissu entre et dans et hors desdits récipients (C, C1-C8)
- un support (1) adapté pour les tranches de verre avec des tranches de tissu congelées d'un bioéchantillon, dans lequel le support (1) est fixé de manière amovible à l'actionneur (10) et comprend un cadre (4) ayant une partie de maintien (5) pour maintenir les tranches de tissu ou sections congelées (2), dans lequel un moyen d'agitation magnétique (3) est fixé rotatif au cadre (4), lequel moyen d'agitation magnétique (3) est conçu pour être entraîné par un entraînement magnétique externe.

12. Processeur (P) selon la revendication 11, dans lequel le fixateur est un fixateur à base d'alcool.

13. Processeur (P) selon la revendication 11 ou 12, comprenant en outre au moins l'un des récipients suivant (C) :
- au moins un récipient (C2, C4) ayant de l'eau, de préférence de l'eau déminéralisée, et
- au moins un récipient supplémentaire ayant une solution de déshydratation (C7, C6).

14. Processeur (P) selon l'une quelconque des revendications 11 à 13,
dans lequel les récipients (C, C1-C8) sont distribués sur la circonférence d'un cercle et autour d'un axe vertical (A), et
dans lequel l'actionneur motorisé (10) comprend un arbre rotatif (12) s'étendant le long et étant rotatif autour de l'axe vertical (A).

15. Processeur (P) selon l'une quelconque des revendications 11 à 14,
dans lequel les tranches de tissu sont montées sur ou collées à des tranches de verre pour former des sections congelées (2) qui sont agencées sur le support (1), et
dans lequel le support (1) est fixé de manière amovible à un portoir (11) sur l'actionneur (10) s'étendant à partir de l'arbre (12) et au-dessus des récipients (C, C1-C8), et le portoir (11) est conçu pour être mobile le long d'un axe vertical (A).

16. Processeur (P) selon l'une quelconque des revendications 11 à 15,
dans lequel le processeur (P) comprend en outre au moins un réservoir de stockage (14-16) pour au moins l'un d'un fixateur, d'une ou plusieurs solutions de coloration, d'une solution de déshydratation, d'eau, et d'une solution de nettoyage, et le ou les réservoirs de stockage (14-16) étant fluidiquement reliés au récipient respectif (C, C1-C8).

17. Processeur (P) selon l'une quelconque des revendications 11 à 16, dans lequel le processeur (P) comprend en outre un système d'échappement (20) pour éliminer les vapeurs s'échappant durant un traitement des tranches de tissu.

18. Support (1) pour tranches congelées de tissu de bioéchantillons comprenant :
un cadre (4) ayant une partie de maintien (5) pour maintenir les tranches de tissu ou pour maintenir les sections congelées (2) formées par les tranches de tissu montées sur ou collées à des tranches de verre,
dans lequel un moyen d'agitation magnétique (3) est fixé rotatif au cadre (4), lequel moyen d'agitation magnétique (3) est conçu pour être entraîné par un entraînement magnétique externe.

19. Support (1) selon la revendication 18,
dans lequel le moyen d'agitation magnétique (3) est fourni au niveau d'une partie inférieure (7) du cadre (4), de préférence au-dessous de la partie de maintien (5).

20. Support (1) selon l'une quelconque des revendications 18 ou 19, dans lequel une partie supérieure (6) du cadre (4) comprend une partie bride (6a) pour fixer le support (1) à un processeur (P).
